# EUROPEAN PATENT SPECIFICATION

(11) **EP 3 361 524 B1**
(45) Date of publication and mention of the grant of the patent: **08.07.2020**
(21) Application number: 18275015.8
(22) Date of filing: 06.02.2018
(51) Int. Cl.: H01M 2/04, H01M 2/06, H01M 2/30, H01M 2/20

(54) **POWER BATTERY TOP CAP STRUCTURE, POWER BATTERY AND BATTERY MODULE**
HOCHLEISTUNGSBATTERIEABSCHLUSSKAPPENSTRUKTUR, HOCHLEISTUNGSBATTERIE UND BATTERIEMODUL
STRUCTURE DE COUVERCLE DE BATTERIE ÉLECTRIQUE, BATTERIE ÉLECTRIQUE ET MODULE DE BATTERIE

(30) Priority: 13.02.2017 CN 201710075441; 02.02.2018 US 201815887112
(43) Date of publication of application: 15.08.2018
(73) Proprietor: Contemporary Amperex Technology Co., Limited, Jiaocheng District Ningde City Fujian PRC 352100 (CN)
(72) Inventor: Guo, Zhijun, Ningde City, Fujian PRC 352100 (CN); Wang, Peng, Ningde City, Fujian PRC 352100 (CN)
(74) Representative: Williams Powell

(56) References cited:
- EP-A2- 2 500 964
- CN-A- 106 299 172
- JP-A- 2006 212 659

## Description

### CROSS-REFERENCE TO RELATED APPLICATION(S)

This application claims the benefit of Chinese Patent Application No. CN201710075441.1, entitled "POWER BATTERY TOP CAP STRUCTURE, POWER BATTERY AND BATTERY MODULE " and filed on February 13, 2017 in the State Intellectual Property Office of the People's Republic of China (PRC) (SIPO), and U.S. Patent Application No. 15/887,112, entitled "POWER BATTERY TOP CAP STRUCTURE, POWER BATTERY AND BATTERY MODULE" and filed on February 2, 2018.

### BACKGROUND

### Field

The present application relates to the technical field of energy storage devices, and particularly relates to a power battery top cap structure, a power battery and a battery module.

### Background

In a non-aqueous electrolyte secondary battery, the material that forms the electrode column of positive electrode is preferably aluminum or an aluminum alloy that is not soluble in a non-aqueous electrolyte. On the other hand, the material that forms the electrode column of negative electrode is typically copper or another metal that does not form an alloy with the negative active material.

When forming a power battery group, a busbar needs to be welded onto a connection block of the positive electrode or a connection block of the negative electrode to connect the batteries in the group. However, because the busbar is typically formed by a single material (such as aluminum or copper), and the melting point of aluminum is lower than that of copper, and because the specific heat capacity of aluminum is higher than that of copper, it is very difficult to weld a copper material and an aluminum material together by way of ultrasonic welding, laser welding, and the like. Accordingly, the connection blocks of the positive electrode and the negative electrode within the top cap structure of a power battery should preferably be formed with the same material as that used to form the busbar. That is to say, the connection blocks of both the positive electrode and the negative electrode are preferably formed by an aluminum material, or are preferably both formed by a copper material. As a result, when the positive electrode column is formed by an aluminum material, and the negative electrode column is formed by a copper material, a structure is used to transition between copper and aluminum to enable both connection blocks outside the bare battery core to be formed by an aluminum material, or to be formed by a copper material.

CN 1062991752 (A) (Hefei Lixiang Battery Tech Co Ltd) discloses a cover plate of lithium ion battery. The cover plate comprises a bases plate; a positive pole rivet hole and a negative pole rivet hole are formed in the base plate at an interval; the positive pole rivet hole and the negative pole rivet hole are respectively and internally provided with a sealing insulation spacer; a positive pole press plate and a negative pole press plate are respectively arranged on the upper end faces of the sealing insulation spacers; the positive pole press plate and the negative pole press plate are riveted into a whole by a positive pole rivet and a negative pole rivet respectively. According to the cover plate, the positive pole rivet and the negative pole rivet are in laser welding with the press plates, so that the connection strength is high and stable, and the connection internal resistance is small; a copper-aluminium composite piece is used as the negative pole press plate, so that PACK aluminium laser welding can be realized by aluminium at the edge; an aluminium sheet is used as a PACK connecting piece, so that cover plate is light in weight and low in cost; therefore, the weight of the cover plate is lightened, and the cost of the cover plate is reduced.

### SUMMARY

The present application provides a power battery top cap structure.

A first embodiment of the present application provides a power battery top cap structure, comprising: a top cap piece; and a first electrode assembly comprising a first electrode column and a first connection block, wherein a top portion of the first electrode column comprises a connection section, wherein the first connection block comprises a main body and a compound portion, a material forming the main body comprises a first base metal, both a material forming the first electrode column and a material forming the compound portion comprise a second base metal, wherein the first base metal is different from the second base metal, wherein the compound portion is bonded with the main body, wherein the compound portion comprises a first connection hole, wherein the first connection block is disposed above the top cap piece, wherein the connection section and the compound portion are welded together, wherein an upper surface of the main body comprises a recessive portion, and the compound portion is inserted within the recessive portion, wherein the main body further comprises a second connection hole, wherein the connection section passes thorough the top cap piece, the second connection hole, and the first connection hole, and further extends from the first connection hole, and; characterized in that: the second connection hole comprises a step portion; wherein the connection section is rivetedly connected to the second connection hole and the first electrode column is engaged with the step portion.

Preferably, a diameter of a top portion of the second connection hole is equal to a diameter of the first connection hole, and a periphery of the connection section is welded to the inner wall of the first connection hole. Preferably, a ratio of the thickness of the compound portion to the thickness of the main body ranges from 1/10 to 2/3. Preferably, an upper surface of the compound portion is lower than an upper surface of the main body. Preferably, a top surface of the connection section is flush with the upper surface of the compound portion. Preferably, the compound portion extends along a direction of a width of the top cap piece, and extends through the thickness of the main body. Preferably, the material forming the main body is aluminum or an aluminum alloy, the material forming the first electrode column is copper or a copper alloy, and the material forming the compound portion is copper or a copper alloy; or the material forming the main body is copper or a copper alloy, a material forming the first electrode column is aluminum or an aluminum alloy, and a material forming the compound portion is aluminum or an aluminum alloy. Preferably, the connection section and the compound portion are connected via laser welding.

Preferably, the main body and the compound portion are bonded together by at least one of a cold rolling process, a hot rolling process, an explosive compound process and an explosive rolling process. Preferably, the power battery top cap structure includes a second electrode assembly that is attached to the top cap piece.

A second embodiment of the present application provides a power battery, which includes the foregoing power battery top cap structure and a second electrode assembly that is attached to the top cap piece.

A third embodiment of the present application provides a battery module, which includes a busbar and the foregoing power battery. The busbar is welded to the main body, and both the material forming the busbar and the material forming the main body include the first base metal.

Embodiments of the present application provide a power battery top cap structure, a power battery, and a battery module that may effectively avoid the fluctuations in the contact electrical resistance on the copper aluminum transition interface caused by shaking, impacting and other external factors.

It is to be understood that both the foregoing general description and the following detailed description are for descriptive purposes only, and are not intended to limit the scope of the present application.

### BRIEF DESCRIPTION OF THE DRAWINGS

Figure 1 is a schematic view of the overall structure of the power battery top cap structure provided in an embodiment of the present application.
Figure 2 is a schematic exploded view of the power battery top cap structure provided in an embodiment of the present application.
Figure 3 is a schematic cross-sectional view of the power battery top cap structure provided in an embodiment of the present application.
Figure 4 is a partial enlarged view of part A shown in Figure 3 when the main body and the compound portion of the power battery top cap structure provided in an embodiment not of the invention adopt the first bonding approach.
Figure 5 is a partial enlarged view of part A shown in Figure 3 when the main body and the compound portion of the power battery top cap structure provided in an embodiment of the present invention adopt the second bonding approach.

Description of element symbols: 10- first electrode assembly; 100- first electrode column; 1000- connection section; 102- first seal member; 104- first connection block; 1040- main body; 1040a- second connection hole; 1040b- step portion; 1042-compound portion; 1042a- first connection hole; 106- first upper insulation member; 108- first lower insulation member; 12- second electrode assembly; 120- second electrode column; 122- second seal member; 124- second connection block; 126-second upper insulation member; 128- second lower insulation member; and 14- top cap piece.

The drawings as described above are incorporated into the Detailed Description to constitute a part of the Detailed Description of the present application. The drawings show one or more embodiments according to the present application, and are used along with the Detailed Description for describing the mechanism of the present application.

### DETAILED DESCRIPTION

The present application will be further described in details in reference to specific exemplary embodiments and accompanying drawings. The terms "front," "rear," "left," "right," "top" and "low" are used in the present application with the respective power battery top cap structure shown in the drawings of the present application.

In a power battery top cap structure, the electrode column may have a copper aluminum structure (that is, the upper part of an electrode column may be formed by copper, and the lower part of the same electrode column may be formed by aluminum; alternatively, the upper part of an electrode column may be formed by aluminum, and the lower part of the same electrode column may be formed by copper) by friction welding or riveting. However, due to structural characteristics of the riveting interface and variability in the riveting process, there may be fluctuation in the contact electrical resistance at the riveting interface between copper and aluminum when the battery is subject to shaking, impacting and other external factors during use. Such fluctuation may prevent the power battery from outputting a stable current. The increase in the contact electrical resistance may also lead to increased heat generation on the copper aluminum interface.

An embodiment of the present application provides a power battery top cap structure, which is installed in the top portion of a power battery. The power battery includes a shell body and a bare battery core. The shell body has an opening thereon. The bare battery core includes a positive electrode piece, a negative electrode piece, and a diaphragm between the positive electrode piece and the negative electrode piece. The bare battery core is accommodated within the shell body. The power battery top cap structure seals the opening on the top portion of the shell body. The electric power stored in the power battery is output to an external device. Typically, the power battery needs to be used as part of a battery group. In particular, a plurality of power batteries is connected together via a busbar serially or in parallel, so as to form a battery group.

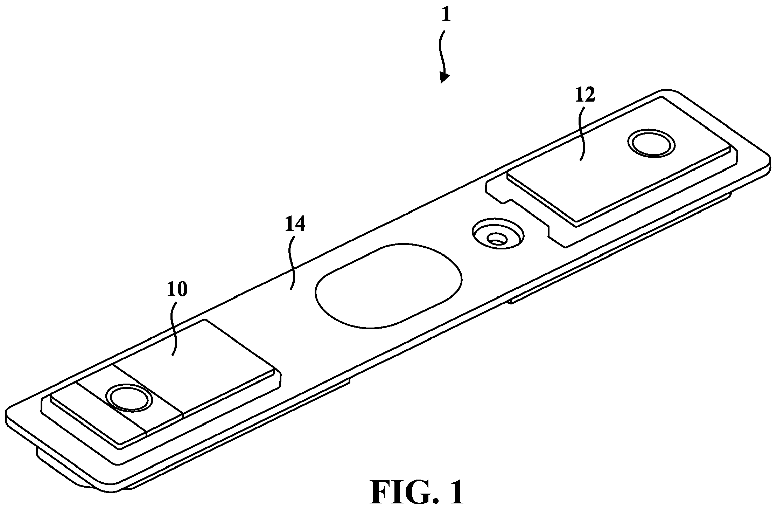

As shown in Figure 1, the power battery top cap structure 1 provided in an embodiment of the present application includes a first electrode assembly 10, a second electrode assembly 12, and a top cap piece 14. Each of the first electrode assembly 10 and the second electrode assembly 12 is electrically connected to one of the positive and negative electrodes of the power battery. That is to say, the first electrode assembly 10 may be electrically connected to either the positive electrode of the power battery or the negative electrode of the power battery. In the following embodiment, the first electrode assembly 10 is electrically connected to the positive electrode of the power battery, while the second electrode assembly 12 is electrically connected to the negative electrode of the power battery.

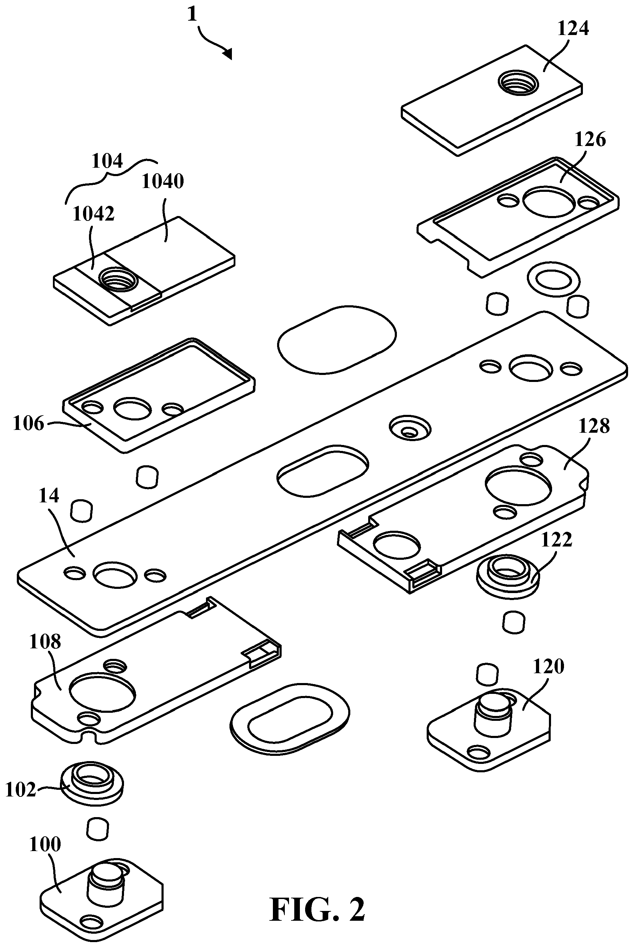

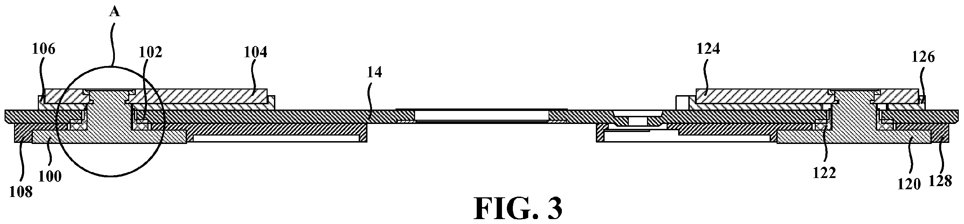

As shown in Figures 2 and 3, the first electrode assembly 10 includes a first electrode column 100, a first seal member 102, a first connection block 104, a first upper insulation member 106, and a first lower insulation member 108, and so on. The second electrode assembly 12 includes a second electrode column 120, a second seal member 122, a second connection block 124, a second upper insulation member 126, and a second lower insulation member 128, and so on.

In order to connect the busbar with the first connection block 104 and the second connection block 124 through laser welding, the respective areas on the first connection block 104 and the second connection block 124 for connecting with the busbar are formed by the same material as that of the busbar (for example, they are all formed by a copper material, or they are all formed by an aluminum material). It is noted that as used here, when two or more elements are described as being formed by the same material, it refers to these elements having the same base metal (the major metal component forming an alloy is called the base metal). For example, when the material forming the first connection block 104 is a pure aluminum material, or an alloy of aluminum manganese, the material forming the second connection block 124 may be a pure aluminum material, or an alloy of aluminum manganese, or an alloy of aluminum silicon, or an alloy of aluminum magnesium, etc., as long as their base metal is aluminum. In an embodiment, the positive electrode column (that is, the first electrode column 100 in an embodiment of the present application) of a power battery has aluminum as its base metal, while the negative electrode column (that is, the second electrode column 120 in an embodiment of the present application) of a power battery has copper as its base metal. In an embodiment in which the base metal of the first connection block 104, the second connection block 124, and the busbar have copper as their base metal, since both the second electrode column 120 and the second connection block 124 have copper as their base metal, the negative electrode in this case does not need a copper aluminum interface. On the other hand, since the areas on the first connection block 104 for connecting with the busbar have copper as their base metal, the first electrode assembly 10 has an interface to transition from the aluminum base metal of the positive electrode to the copper base metal of the first connection block 104. The specific assembly process will be provided in detail below.

As shown in Figure 2, in this embodiment of the present application, the material forming the first electrode column 100 is aluminum or an aluminum alloy. In particular, the first electrode column 100 does not have a copper aluminum interface. On the other hand, the first connection block 104 may be used for the copper aluminum interface. The first connection block 104 has a main body 1040 and a compound portion 1042. The main body 1040 is the main structure of the first connection block 104. In addition, the main body is used for welding with the busbar. Hence, the material forming the main body 1040 is copper or a copper alloy. At the same time, the material forming the compound portion 1042 is aluminum or an aluminum alloy, which may be connected with the first electrode column 100 by welding. Since a welded joint surface is formed by welding the compound portion 1042 to the first electrode column 100, a stable power transmission surface is formed, thus avoiding fluctuation in the contact electrical resistance associated with a riveting surface caused by an external shaking or impacting force. The compound portion 1042 is bonded with the main body 1040 in a bonding process. After the bonding process, a bonded interface is formed between the two. The bonded interface is a metallurgical bond (a type of bond formed when the atoms of two metals on the bonding surfaces diffuse into each other to form an interface). The rate of bonding at the bonded interface between the main body 1040 and the compound portion 1042 typically cannot be lower than 90%, and ideally the rate should reach 100%. Moreover, preferably, the tensile strength of the bonded interface between the compound portion 1042 and the main body 1040 is greater than either the tensile strength of the main body 1040 or the tensile strength of the compound portion 1042. Accordingly, the bonded interface between the compound portion 1042 and the main body 1040 may form a stable power transmission surface, and the two bonding surfaces will not slide against each other to cause fluctuation in the contact electrical resistance when there is an external shaking or impacting force.

Because the compound portion 1042 and the main body 1040 are formed by different materials, they cannot be securely bonded together by laser welding, and accordingly a special processing technique is needed. However, none of the available special processing techniques may be easily carried out during the assembly process of the power battery top cap structure. As a result, the bonding process to bond the compound portion 1042 and the main body 1040 may be carried out in a process prior to the assembly.

In related technologies, one approach may be to have a copper aluminum interface on the first electrode column 100. However, due to the structural limitation of the first electrode column 100, a more complex approach may have to be employed, such as by a friction welding process. Moreover, such a bonding process may only be carried out one by one, and thus is not suitable for large scale production. In addition, because parts such as the first seal member 102 are used to secure and seal the connection between the first electrode column 100 and the first connection block 104, when the copper aluminum interface surface of the first electrode column 100 is broken, the first seal member 102 may fall off, thereby causing the power battery top cap structure 1 to lose its sealing function and causing battery leakage.

With respect to the first electrode column 100, the first connection block 104 may be in a plate or flake shape. Hence, the first connection block 104 may be formed by a bonding process such as a cold rolling process, a hot rolling process, an explosive bonding process, an explosive rolling process, or other simpler processes.

The compound portion 1042 may be bonded with the main body 1040 to form a bonded interface by one of the following approaches.

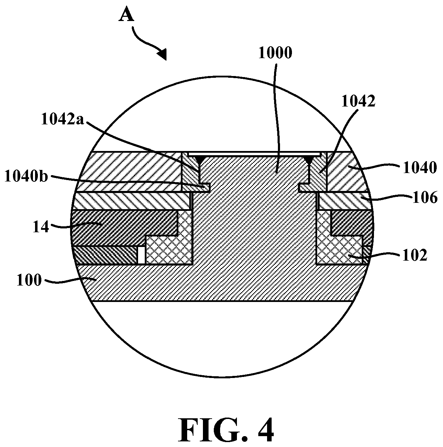

In the first approach, the compound portion 1042 is disposed through the main body 1040 from the upper surface of the main body, and the bonding process is carried out between the side wall of the compound portion 1042 and the main body 1040 (see Figure 4).

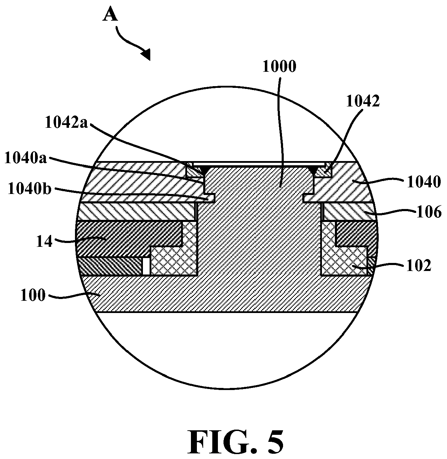

In the second approach, the compound portion 1042 is disposed on the upper surface of the main body 1040, and the bonding process is carried out between the bottom surface of the compound portion 1042 and the main body 1040. In addition, in this process, in order to enhance the bonding between the compound portion 1042 and the main body 1040, a recessive portion (not identified with a numerical identifier in the figures) may be further provided on the upper surface of the main body 1040. As a result, the compound portion 1042 may be inserted into the recessive portion of the main body 1040 (see Figure 5). In this way, three side surfaces of the compound portion 1042 may be involved in the bonding process with the main body 1040, further increasing the surface area of the bonded interface.

In order to increase processing efficiency, in each of the two bonding approaches mentioned above, the compound portion 1042 may extend along a direction perpendicular to the thickness of the top cap piece 14, e.g., along the direction of the width of the top cap piece 14 until reaching the two side edges of the main body 1040. Accordingly, in a bonding process, the bonding surface may extend along the direction of the compound portion 1042 for a considerably long distance. Subsequently, the bonded product may be cut into many single pieces for the first connection block 104. In this way, a single bonding process may be used to generate a batch of products. Typically, two neighboring power batteries are arranged along the direction of the width of the top cap piece 14. As a result, in order to facilitate the connection of the busbar, preferably, a through groove may also extend along the direction of the width of the top cap piece 14, such that more room may be saved for connecting the busbar.

In the first bonding approach mentioned above, as shown in Figure 4, the compound portion 1042 may be further provided with a first connection hole 1042a, and the top portion of the first electrode column 100 includes a connection section 1000. In an assembly process, the first seal member 102 and the first lower insulation member 108 are disposed between the first electrode column 100 and the lower surface of the top cap piece 14; while the first upper insulation member 106 is disposed between the first connection block 104 and the upper surface of the top cap piece 14. The connection section 1000 of the first electrode column 100 passes from the bottom side through the first seal member 102, the top cap piece 14, and the first upper insulation member 106, and then extends into the first connection hole 1042a. Subsequently, the compound portion 1042 may be welded to the connection section 1000 by a process such as a laser welding process or a supersonic welding process, thus ensuring that a stable power transmission surface with enhanced bonding strength is formed between the first electrode column 100 and the first connection block 104.

In the second bonding approach mentioned above, as shown in Figure 5, in addition to the first connection hole 1042a provided on the compound portion 1042, the main body 1040 is further provided with a second connection hole 1040a. The second connection hole 1040a is arranged to oppose the first connection hole 1042a. In an assembly process, the arrangement of the first seal member 102, the first upper insulation member 106 and the first lower insulation member 108 is maintained the same as in the first bonding approach. The connection section 1000 of the first electrode column 100 passes from the bottom side through the first seal member 102, the top cap piece 14, the first upper insulation member 106, and the second connection hole 1040a, and is welded to the first connection hole 1042a of the compound portion 1042.

In the second bonding approach, if the compound portion 1042 is too thin, the strength of the welded joint between the connection section 1000 and the compound portion 1042 may be decreased. On the other hand, if the compound portion 1042 is too thick, it may decrease the intrinsic strength of the main body 1040 (in particular the area around the second connection hole 1040a). Such decrease in the strength of the main body 1040 may present a potential risk for the connection between the first connection block 104 and the busbar. In this regard, the ratio of the thickness of the compound portion 1042 to the thickness of the main body 1040 is preferably within a suitable range, namely (1/10 to 2/3), to ensure a desirable overall performance.

In adopting the foregoing two bonding approaches, if there is excessive shaking or impact, the welded joint between the compound portion 1042 and the connection section 1000 alone may not be able to maintain a secure connection between the first electrode column 100 and the first connection block 104. In one embodiment, in order to enhance the strength of the joint between the first electrode column 100 and the first connection block 104, the connection section 1000 is further rivetedly connected with the first connection hole 1042a, or with the second connection hole 1040a. This approach of rivetedly connecting the connection section 1000 to the first connection hole 1042a may be utilized using conventional techniques in the first bonding approach. In the second bonding approach, since the compound portion 1042 does not extend through the entire thickness of the main body 1040, the compound portion 1042 may be relatively thin for the riveting process. In addition, it may be difficult to carry out the riveting process and the welding process at the same time.

In order to facilitate the riveting connection, the first connection hole 1042a and the second connection hole 1040a may be in a structure featuring a larger top portion and a smaller lower portion. In addition, the riveting connection may be aided by certain slope structure and step surface structure. In this embodiment of the present application, in order to improve the strength of the riveting connection, preferably, a circle of step portion 1040b is further provided within the first connection hole 1042a or within the second connection hole 1040a. The first electrode column 100 is engaged tightly with the step portion 1040b, thus reducing the relative moving room therein between. When the connection section 1000 is rivetedly connected with the second connection hole 1040a with the aid of the step portion 1040b, a riveting force may be directed downward. The downward riveting force tightly couples the connection section 1000 to the step portion 1040b. The riveting force prevents the bonding surface between the main body 1040 and the compound portion 1042 from weakening or fracturing due to an external force. For example, the bonding surface between the main body 1040 and the compound portion 1042 may not weaken even when subjected to long term shearing force from the bare battery core moving in the vertical direction, or from other shaking or impacting force, thus preventing fluctuations in the contact electrical resistance on the transition interface between the two different materials. After finishing the riveting process, the top surface of the connection section 1000 may protrude from the first connection hole 1042a. Next, a welding operation may be further carried out to further enhance the secure connection between the first connection block 104 and the first electrode column 100, and thus reducing the probability of occurrence of fluctuation in the contact electrical resistance.

In order to improve the welding efficiency, as well as to facilitate the riveting operation, preferably, the diameter of the top portion of the second connection hole 1040a and the diameter of the first connection hole 1042a may be equal. In this way, the connection section 1000 may extend into the first connection hole 1042a prior to the riveting operation, which may facilitate the following riveting operation. After finishing the riveting process, the periphery of the connection section 1000 is welded onto the inner wall of the first connection hole 1042a, thus using the riveting connection to further enhance the welding strength.

The welding operation may generate some welding gap and welding dross, which may compromise the flatness of the upper surface of the first connection block 104. In order to avoid the foregoing problem, after the bonding process of the first connection block 104, preferably, the upper surface of the compound portion 1042 is lower than the upper surface of the main body 1040 to reserve some room for receiving the welding gap and welding dross, while the upper surface of the main body 1040 remains flat. In addition, the top surface of the connection section 1000 is preferably flush with the upper surface of the compound portion 1042. Such topology not only improves the welding efficiency and reduces welding difficulty, but also effectively ensures that the welding gap and welding dross do not exceed the upper surface of the main body 1040.

As for the second electrode assembly 12, as shown in Figures 2 and 3, the second seal member 122 and the second lower insulation member 128 are disposed between the second electrode column 120 and the lower surface of the top cap piece 14. The second upper insulation member 126 is disposed between the second connection block 124 and the upper surface of the top cap piece 14. The top portion of the second electrode column 120 passes through the second seal member 122, the top cap piece 14 and the second upper insulation member 126, and then is connected with the second connection block 124 by a riveting process, a welding process, or other processes, thus tightly securing the second connection block 124, the second upper insulation member 126, the second seal member 122, and the second lower insulation member 128 to one another.

The foregoing is an embodiment of the present application in which the first electrode assembly 10 is connected to the positive electrode, the second electrode assembly 12 is connected to the negative electrode, and the busbar thereof uses copper as the base metal.

In an embodiment in which the busbar uses aluminum as the base metal, the first electrode assembly 10 is connected to the negative electrode, and the second electrode assembly 12 is connected to the positive electrode. That is, a copper aluminum transition is achieved through the negative electrode of the power battery. More specifically, in this embodiment, the base metals of the first electrode column 100, the main body 1040 and the compound portion 1042 are switched from those of the previous embodiment. Thus, the base metal of the first electrode column 100 and the compound portion 1042 is copper, while the base metal of the main body 1040 is aluminum. The connection structures of the various components are the same as those disclosed in the previously described embodiment of the present application, which will not be repeated herein.

The power battery top cap structure, the power battery and the battery module provided in the embodiments of the present application may effectively avoid the fluctuations in the contact electrical resistance on the transition interface between two different materials caused by shaking, impacting and other external factors.

Described above are exemplary embodiment of the present applications, and the disclosed embodiments are not intended to limit the present application. The scope of the invention is defined by the claims.

## Claims

1. A power battery top cap structure (1), comprising:
a top cap piece (14); and
a first electrode assembly (10) comprising a first electrode column (100) and a first connection block (104), wherein a top portion of the first electrode column (100) comprises a connection section (1000), wherein the first connection block (104) comprises a main body (1040) and a compound portion (1042), a material forming the main body (1040) comprises a first base metal, both a material forming the first electrode column (100) and a material forming the compound portion (1042) comprise a second base metal, wherein the first base metal is different from the second base metal, wherein a base metal is the major metal component forming an alloy or a pure metal material,
wherein the compound portion (1042) is bonded with the main body (1040), wherein the compound portion (1042) comprises a first connection hole (1042a), wherein the first connection block (104) is disposed above the top cap piece (14), wherein the connection section (1000) and the compound portion (1042) are welded together, wherein an upper surface of the main body (1040) comprises a recessive portion, and the compound portion (1042) is inserted within the recessive portion, wherein the main body (1040) further comprises a second connection hole (1040a), wherein the connection section (1000) passes thorough the top cap piece (14), the second connection hole (1040a), and the first connection hole (1042a), and further extends from the first connection hole (1042a) [[, and]];
**characterized in that**:
the second connection hole (1040a) comprises a step portion (1040b); wherein the connection section (1000) is rivetedly connected to the second connection hole (1040a) and the first electrode column (100) is engaged with the step portion (1040b).

2. The power battery top cap structure (1) according to claim 1, wherein a diameter of a top portion of the second connection hole (1040a) is equal to a diameter of the first connection hole (1042a), and a periphery of the connection section (1000) is welded to the inner wall of the first connection hole (1042a).

3. The power battery top cap structure (1) according to any preceding claim, wherein a ratio of a thickness of the compound portion (1042) to a thickness of the main body (1040) ranges from 1/10 to 2/3.

4. The power battery top cap structure (1) according to any preceding claim, wherein an upper surface of the compound portion (1042) is lower than an upper surface of the main body (1040).

5. The power battery top cap structure (1) according to claim 4, wherein a top surface of the connection section (1000) is flush with the upper surface of the compound portion (1042).

6. The power battery top cap structure (1) according to any preceding claim, wherein the compound portion (1042) extends along a direction of a width of the top cap piece (14), and extends through a thickness of the main body (1040).

7. The power battery top cap structure (1) according to any preceding claim, wherein the material forming the main body (1040) comprises aluminum or an aluminum alloy, the material forming the first electrode column (100) comprises copper or a copper alloy, and the material forming the compound portion (1042) comprises copper or a copper alloy.

8. The power battery top cap structure (1) according to any preceding claim, wherein the material forming the main body (1040) comprises copper or a copper alloy, the material forming the first electrode column (100) comprises aluminum or an aluminum alloy, and the material forming the compound portion (1042) comprises aluminum or an aluminum alloy.

9. The power battery top cap structure (1) according to any preceding claim, wherein the connection section (1000) and the compound portion (1042) are connected via laser welding.

10. The power battery top cap structure (1) according to any preceding claim, wherein the main body (1040) and the compound portion (1042) are bonded together by at least one of a cold rolling process, a hot rolling process, an explosive compound process and an explosive rolling process.

11. A power battery comprising a power battery top cap structure (1) according to any preceding claim and a second electrode assembly (12) that is attached to the top cap piece (14).

12. A battery module, comprising:
a busbar; and
a power battery as claimed in claim 11.

13. A battery module as claimed in claim 12, wherein the busbar is welded to the main body (1040).

14. A battery module as claimed in claim 12 or 13, wherein both a material forming the busbar and the material forming the main body (1040) include the first base metal.

## Patentansprüche

1. Obere Kappenstruktur (1) einer Leistungsbatterie, aufweisend:
ein oberes Kappenstück (14); und
eine erste Elektrodenanordnung (10), aufweisend eine erste Elektrodensäule (100) und einen ersten Verbindungsblock (104), wobei ein oberer Abschnitt der ersten Elektrodensäule (100) einen Verbindungsabschnitt (1000) aufweist, wobei der erste Verbindungsblock (104) einen Hauptkörper (1040) und einen Verbundabschnitt (1042) aufweist, wobei ein Material, das den Hauptkörper (1040) bildet, ein erstes Basismetall aufweist, wobei sowohl ein Material, das die erste Elektrodensäule (100) bildet, als auch ein Material, das den Verbundabschnitt (1042) bildet, ein zweites Basismetall aufweisen, wobei sich das erste Basismetall von dem zweiten Basismetall unterscheidet, wobei ein Basismetall die Hauptmetallkomponente ist, die eine Legierung oder ein reines Metallmaterial bildet,
wobei der Verbundabschnitt (1042) mit dem Hauptkörper (1040) verbunden ist, wobei der Verbundabschnitt (1042) ein erstes Verbindungsloch (1042a) aufweist, wobei der erste Verbindungsblock (104) über dem oberen Kappenstück (14) angeordnet ist,
wobei der Verbindungsabschnitt (1000) und der Verbundabschnitt (1042) miteinander verschweißt sind, wobei eine obere Oberfläche des Hauptkörpers (1040) einen rezessiven Abschnitt aufweist, und der Verbundabschnitt (1042) in dem rezessiven Abschnitt eingefügt ist, wobei der Hauptkörper (1040) weiterhin ein zweites Verbindungsloch (1040a) aufweist, wobei der Verbindungsabschnitt (1000) durch das obere Kappenstück (14), das zweite Verbindungsloch (1040a), und das erste Verbindungsloch (1042a) hindurch verläuft und sich weiter von dem ersten Verbindungsloch (1042a) erstreckt, und;
**dadurch gekennzeichnet,**
**dass** das zweite Verbindungsloch (1040a) einen Stufenabschnitt (1040b) aufweist;
wobei der Verbindungsabschnitt (1000) mit dem zweiten Verbindungsloch (1040) vernietet ist und die erste Elektrodensäule (100) mit dem Stufenabschnitt (1040b) in Eingriff steht.

2. Obere Kappenstruktur (1) einer Leistungsbatterie nach Anspruch 1, wobei ein Durchmesser eines oberen Abschnitts des zweiten Verbindungslochs (1040a) gleich einem Durchmesser des ersten Verbindungslochs (1042a) ist, und eine Peripherie des Verbindungsabschnitts (1000) an der inneren Wand des ersten Verbindungslochs (1042a) angeschweißt ist..

3. Obere Kappenstruktur (1) einer Leistungsbatterie nach einem der vorhergehenden Ansprüche, wobei ein Verhältnis einer Dicke des Verbundabschnitts (1042) zu einer Dicke des Hauptkörpers (1040) im Bereich von 1/10 bis 2/3 liegt.

4. Obere Kappenstruktur (1) einer Leistungsbatterie nach einem der vorhergehenden Ansprüche, wobei eine obere Oberfläche des Verbundabschnitts (1042) niedriger ist als eine obere Oberfläche des Hauptkörpers (1040).

5. Obere Kappenstruktur (1) einer Leistungsbatterie nach Anspruch 4, wobei eine obere Oberfläche des Verbindungsabschnitts (1000) bündig mit der oberen Oberfläche des Verbundabschnitts (1042) ist.

6. Obere Kappenstruktur (1) einer Leistungsbatterie nach einem vorhergehenden Anspruch, wobei sich der Verbundabschnitt (1042) entlang einer Richtung einer Breite des oberen Kappenstücks (14) erstreckt und sich durch eine Dicke des Hauptkörpers (1040) erstreckt.

7. Obere Kappenstruktur (1) einer Leistungsbatterie nach einem der vorhergehenden Ansprüche, wobei das Material, das den Hauptkörper (1040) bildet, Aluminium oder eine Aluminiumlegierung aufweist, das Material, das die erste Elektrodensäule (100) bildet, Kupfer oder eine Kupferlegierung aufweist, und das Material, das den Verbundabschnitt (1042) bildet, Kupfer oder eine Kupferlegierung aufweist.

8. Obere Kappenstruktur (1) einer Leistungsbatterie nach einem der vorhergehenden Ansprüche, wobei das Material, das den Hauptkörper (1040) bildet, Kupfer oder eine Kupferlegierung aufweist, das Material, das die erste Elektrodensäule (100) bildet, Aluminium oder eine Aluminiumlegierung aufweist, und das Material, das den Verbundabschnitt (1042) bildet, Aluminium oder eine Aluminiumlegierung aufweist.

9. Obere Kappenstruktur (1) einer Leistungsbatterie nach einem der vorhergehenden Ansprüche, wobei der Verbindungsabschnitt (1000) und der Verbundabschnitt (1042) durch Laserschweißen verbunden sind.

10. Obere Kappenstruktur (1) einer Leistungsbatterie nach einem der vorhergehenden Ansprüche, wobei der Hauptkörper (1040) und der Verbundabschnitt (1042) durch mindestens einen Kaltwalzprozess, einen Warmwalzprozess, einen Explosionsverbundprozess und einen Explosionswalzprozess miteinander verbunden sind.

11. Leistungsbatterie, aufweisend eine obere Kappenstruktur (1) einer Leistungsbatterie nach einem der vorhergehenden Ansprüche und eine zweite Elektrodenanordnung (12), die an dem oberen Kappenstück (14) angeordnet ist.

12. Batteriemodul, aufweisend:
eine Sammelschiene; und
eine Leistungsbatterie nach Anspruch 11.

13. Batteriemodul nach Anspruch 12, wobei die Sammelschiene an dem Hauptkörper (1040) angeschweißt ist.

14. Batteriemodul nach Anspruch 12 oder 13, wobei sowohl ein Material, das die Sammelschiene bildet, als auch das Material, das den Hauptkörper (1040) bildet, das erste Basismetall umfassen.

## Revendications

1. Structure de couvercle de batterie électrique (1), comprenant :
une pièce couvercle (14) ; et
un premier ensemble électrode (10) comprenant une première colonne d'électrode (100) et un premier bloc de raccordement (104), une partie supérieure de la première colonne d'électrode (100) comprenant une section de raccordement (1000), le premier bloc de raccordement (104) comprenant un corps principal (1040) et une partie composite (1042), un matériau formant le corps principal (1040) comprenant un premier métal de base, à la fois un matériau formant la première colonne d'électrode (100) et un matériau formant la partie composite (1042) comprenant un second métal de base, le premier métal de base étant différent du second métal de base, un métal de base étant le composant métallique principal formant un alliage ou un matériau métallique pur, la partie composite (1042) étant liée au corps principal (1040), la partie composite (1042) comprenant un premier trou de raccordement (1042a), le premier bloc de raccordement (104) étant disposé au-dessus de la pièce couvercle (14), la section de raccordement (1000) et la partie composite (1042) étant soudées ensemble, une surface supérieure du corps principal (1040) comprenant une partie évidée, et la partie composite (1042) étant introduite à l'intérieur de la partie évidée, le corps principal (1040) comprenant en outre un second trou de raccordement (1040a), la section de raccordement (1000) passant à travers la pièce couvercle (14), le second trou de raccordement (1040a) et le premier trou de raccordement (1042a), et s'étendant plus loin à partir du premier trou de raccordement (1042a) ; et
**caractérisée par le fait que** :
le second trou de raccordement (1040a) comprend une partie étagée (1040b) ; la section de raccordement (1000) étant reliée par rivetage au second trou de raccordement (1040a) et la première colonne d'électrode (100) étant engagée avec la partie étagée (1040b).

2. Structure de couvercle de batterie électrique (1) selon la revendication 1, dans laquelle un diamètre d'une partie supérieure du second trou de raccordement (1040a) est égal à un diamètre du premier trou de raccordement (1042a), et une périphérie de la section de raccordement (1000) est soudée à la paroi interne du premier trou de raccordement (1042a).

3. Structure de couvercle de batterie électrique (1) selon l'une quelconque des revendications précédentes, dans laquelle un rapport d'une épaisseur de la partie composite (1042) à une épaisseur du corps principal (1040) est compris dans la plage allant de 1/10 à 2/3.

4. Structure de couvercle de batterie électrique (1) selon l'une quelconque des revendications précédentes, dans laquelle une surface supérieure de la partie composite (1042) est plus basse qu'une surface supérieure du corps principal (1040).

5. Structure de couvercle de batterie électrique (1) selon la revendication 4, dans laquelle une surface supérieure de la section de raccordement (1000) est alignée avec la surface supérieure de la partie composite (1042).

6. Structure de couvercle de batterie électrique (1) selon l'une quelconque des revendications précédentes, dans laquelle la partie composite (1042) s'étend selon une direction d'une largeur de la pièce couvercle (14) et s'étend à travers une épaisseur du corps principal (1040).

7. Structure de couvercle de batterie électrique (1) selon l'une quelconque des revendications précédentes, dans laquelle le matériau formant le corps principal (1040) comprend de l'aluminium ou un alliage d'aluminium, le matériau formant la première colonne d'électrode (100) comprend du cuivre ou un alliage de cuivre, et le matériau formant la partie composite (1042) comprend le cuivre ou un alliage de cuivre.

8. Structure de couvercle de batterie électrique (1) selon l'une quelconque des revendications précédentes, dans laquelle le matériau formant le corps principal (1040) comprend du cuivre ou un alliage de cuivre, le matériau formant la première colonne d'électrode (100) comprend de l'aluminium ou un alliage d'aluminium, et le matériau formant la partie composite (1042) comprend de l'aluminium ou un alliage d'aluminium.

9. Structure de couvercle de batterie électrique (1) selon l'une quelconque des revendications précédentes, dans laquelle la section de raccordement (1000) et la partie composite (1042) sont reliées par soudage laser.

10. Structure de couvercle de batterie électrique (1) selon l'une quelconque des revendications précédentes, dans laquelle le corps principal (1040) et la partie composite (1042) sont liés ensemble par au moins un parmi un procédé de laminage à froid, un procédé de laminage à chaud, un procédé composite à explosif et un procédé de laminage par explosif.

11. Batterie électrique comprenant une structure de couvercle de batterie électrique (1) selon l'une quelconque des revendications précédentes et un second ensemble électrode (12) qui est fixé à la pièce couvercle (14) .

12. Module de batterie, comprenant :
une barre omnibus ; et
une batterie électrique selon la revendication 11.

13. Module de batterie selon la revendication 12, dans lequel la barre omnibus est soudée au corps principal (1040).

14. Module de batterie selon la revendication 12 ou 13, dans lequel à la fois un matériau formant la barre omnibus et le matériau formant le corps principal (1040) comprennent le premier métal de base.
